# EUROPEAN PATENT APPLICATION

(11) **EP 0 584 464 A1**
(43) Date of publication of application: **02.03.1994**
(21) Application number: 93108167.3
(22) Date of filing: 19.05.1993
(51) Int. Cl.: H04B 10/10

(54) **Infrared ray receiving and transmitting system**

(30) Priority: 21.08.1992 JP 222735/92
(71) Applicant: KABUSHIKI KAISHA TOSHIBA, Kawasaki-shi, Kanagawa-ken 210 (JP)
(72) Inventor: Mimura, Hideki, c/o Intellectual Property Division, Minato-ku, Tokyo 105 (JP)
(74) Representative: Henkel, Feiler, Hänzel & Partner

(57) **Abstract**

A transmitting device discriminating section (101) discriminates a type and a class of a data generating source, and a transmitting format generating section (103) receives a device information code and control data in accordance with the result of the discrimination. A first array area for a reader code, a second array area for a device information code, and a third array area for control data are sequentially arranged, and a bit length of the third array area is reserved by freely varying its effective data length in accordance with device information, thereby a data transmitting format is formed. In a receiving side, a transmitting device discriminating section (203) discriminates next incoming device information in response to the discrimination of a reader code by a reader code discriminating section (202), and a data processing section (204) sets the effective data length of control data against a data monitoring section (205), thereby data processing is performed.

## Description

The present invention relates to an infrared ray receiving and transmitting system which is used in a remote controller attached to domestic electrical appliances such as a television, a video tape recorder, an air conditioner, etc.

In the remote controlling apparatus attached to the domestic electrical appliances, data in which a pair of two bytes per one transfer cycle is used as one block is transferred.

A data transmission format by used of the conventional remote controlling apparatus is formed of a reader code, a custom code, and a control code. In a case that a remote control signal is sent from a transmitter, the reader code, which informs the start of the transmission, is transmitted, and sequentially the custom code of each manufacturer is transmitted so as to prevent radio interference, and particular control data in which a pair of two bytes is used as one block is sequentially transmitted.

According to the data transfer format by use of the conventional infrared remote controlling apparatus, only data of two bytes per one transfer cycle can be transmitted. However, in recent years, it has been required that remote control is performed even in an apparatus for an office automation (OA) in addition to the domestic electrical appliances. To satisfy this requirement, in a case where the use of a mouse, for example, is needed to transmit moving data or the use of a tablet is needed to transmit absolute coordinate data, these systems are designed such that a plurality of block data is transmitted and effective data having one meaning by the plurality of block data pairs is formed. If the conventional infrared remote control apparatus is used in such systems, a plurality of transfer cycles is needed since only data of two bytes per one transfer cycle can be transmitted. However, if a plurality of number of times of data transfer is performed, there occurs a problem in that transfer time increases by overhead time of a reader code in accordance with the number of times of data transfer. Moreover, in the side of the receiver, there is needed a discriminating function of discriminating whether a pair of data is effective or not when the pair of data is sampled, and the discrimination is complicated.

As mentioned above, the conventional infrared remote control apparatus is premised on the point that data, which can express a control object by the pair of two bytes, is transferred. However, in the case that effective data is transmitted at the plurality of transfer cycles, there occurs the problem in that data is generated every transfer cycle, and transfer time increases by overhead time of the reader code, which informs the start of the transfer. Moreover, there is needed the discriminating function of discriminating whether a pair of data is effective or not when the pair of data is sampled, and the discrimination is complicated.

An object of the present invention is to provide an infrared ray receiving and transmitting system wherein an array area of control data can be freely varied in accordance with an effective data length necessary for forming control data output from various types of transmitting data generating source (data generating device), high speed processing can be performed, and data processing can be easily performed.

In order to attain the above object, there is provided an infrared ray transmitting apparatus, which transmits a reader code informing a start of transmission before the start of transmission of an infrared signal, comprising discriminating means for discriminating a type and a class of a transmitter serving as data generating source, and means for coding the type and class of the transmitter obtained by the discriminating means as device information, for sequentially reserving an array area of the reader code, an array area of the device information code, and data array area in accordance with a necessary effective data length allocated to device information, and for forming a format of a signal to be transmitted.

By use of the above means, the data length of the data array area can be freely allocated in accordance with the class and type of the transmitting device. Therefore, necessary data can be transmitted in accordance with the various types of devices in one transfer cycle. In the receiver side, since necessary effective data all exist in one transfer cycle, data processing can be easily performed.

This invention can be more fully understood from the following detailed description when taken in conjunction with the accompanying drawings, in which:
Figs. 1A to 1C are views explaining an example of a data transfer format relating to one embodiment of the present invention, respectively;
Fig. 2A is a view explaining a device information code of Fig. 1 in more detail;
Fig. 2B shows an example of a code to be used to discriminating a transmitting device type and its class;
Figs. 2C to 2E are views showing array areas of control data in a text entry device, a relative coordinate device, and an absolute coordinate device, respectively; and
Fig. 3 is a block diagram showing an infrared ray receiving system according to one embodiment of the present invention.

An embodiment of the present invention will be explained with reference to drawings.

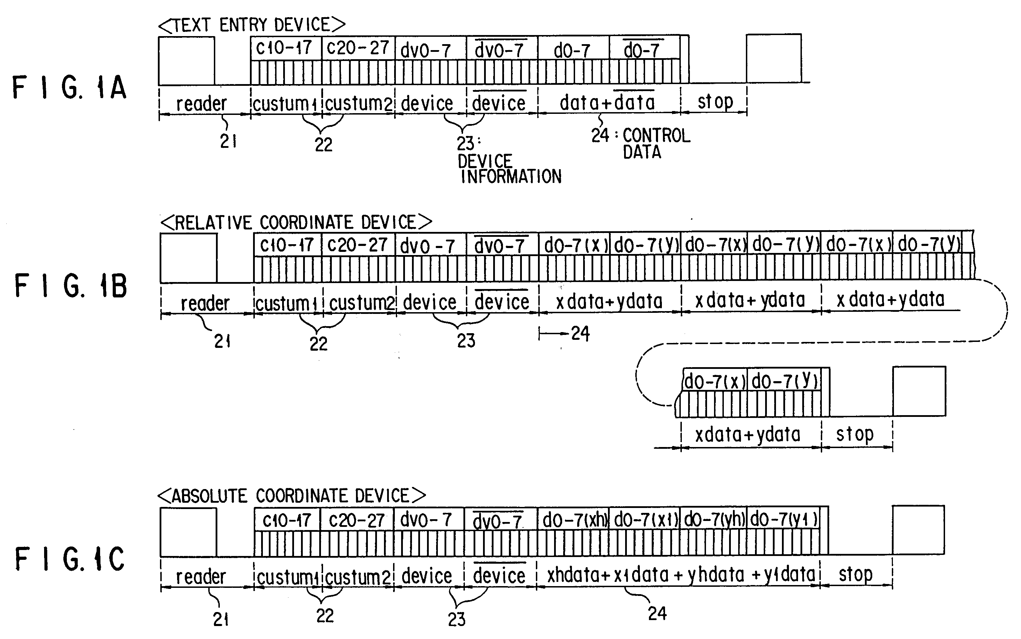

Fig. 1 shows an example of a format of a signal, which is generated by the apparatus according to the present invention and transmitted. Fig. 1A shows a signal format in a case where data of the text entry device is transmitted, Fig. 1B shows a signal format in a case where data of the relative coordinate device is transmitted, and Fig. 1C shows a signal format in a case where data of the absolute coordinate device is transmitted. In these signal formats, one transfer cycle is expressed, and their data lengths differ in accordance with the respective transmitting devices. However, the similar format can be used up to the device code (device information code) for defining the transmitting device.

Reference numeral 21 shown in each signal format is an array area of a reader code showing the start of transmission, 22: an array area of a particular custom code of each manufacturer, 23: an array area of the device information code for discriminating the class of the transmitting device and the type thereof, and 24: an array area of actual control data.

In the array area of control data in the case of the text entry device, data having a pair of two bytes is set as one block.

In the array area of control data in the case of the relative coordinate device, data having a pair of two bytes (expressing the movement in X and Y directions) is set as one block.

In the array area of control data in the case of the absolute coordinate device, data having a pair of four bytes (expressing the position of the absolute coordinate in X and Y directions) is set as one block.

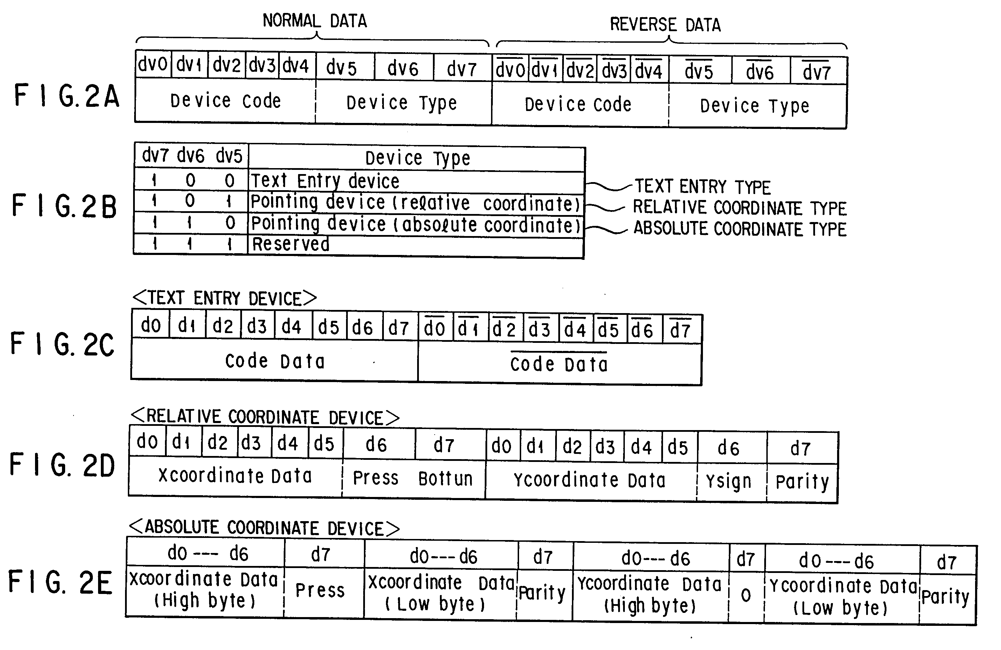

Fig. 2A shows the sampled array area 23 of the device information code for defining the transmitting device. The device information code is formed of normal data and reverse data having a pair of two bytes so as to improve reliability of data. In processing data having the pair of two bytes, all data transmission is processed as invalid data after the case that normal data and reverse data are different in the transmitting or receiving side.

In the device information code, for example, a code having bits 0 to 4 is used to discriminate a keyboard, a track ball, a mouse, etc., in each type, and a code having bits 5 to 7 is used to discriminate the types of the text entry device, relative coordinate device, and absolute coordinate device. Fig. 2B shows an example of a code having dv5 to dv7 discriminating the types of the text entry device, relative coordinate device, and absolute coordinate device.

Figs. 2C to 2E show the array areas of the actual control data in the text entry device, relative coordinate device, and absolute coordinate device, respectively.

In the case of the text entry device, data in one block is formed of a pair of two bytes of normal data and reserve data in order to improve reliability of data.

In the case of the relative coordinate device, data in one block is formed of a pair of two bytes showing a relative movement in X and Y directions. The movement, which can be transmitted at one time in each direction X and Y, is in the range of ±63. Then, the last bit of pair data (bit 7 of data in Y direction) is used as a parity bit. Thereby, an error discrimination of the effective bit (15 bit) of the pair of X and Y can be performed. The bit 7 of data in Y direction is used in a case that the relative movement and button data are simultaneously transmitted as in the use of, for example, the mouse.

In the case of the absolute coordinate device, data in one block is formed of a pair of four bytes showing an absolute coordinate in X and Y directions. In both X and Y coordinates, the number of bits is increased such that the coordinate ranging from 0 to 4096 can be transmitted at one time. Due to this, data is arrayed in the order of the upper and lower positions of the X coordinate and the upper and lower positions of the Y coordinate. A parity bit is set to the last bit of each unit of X and Y coordinates, so that the error discrimination of each unit of X and Y coordinates can be performed. Bit 7 of H byte in the X coordinate is used in a case that data of whether or not a panel such as a touch panel is depressed when being used is simultaneously transmitted.

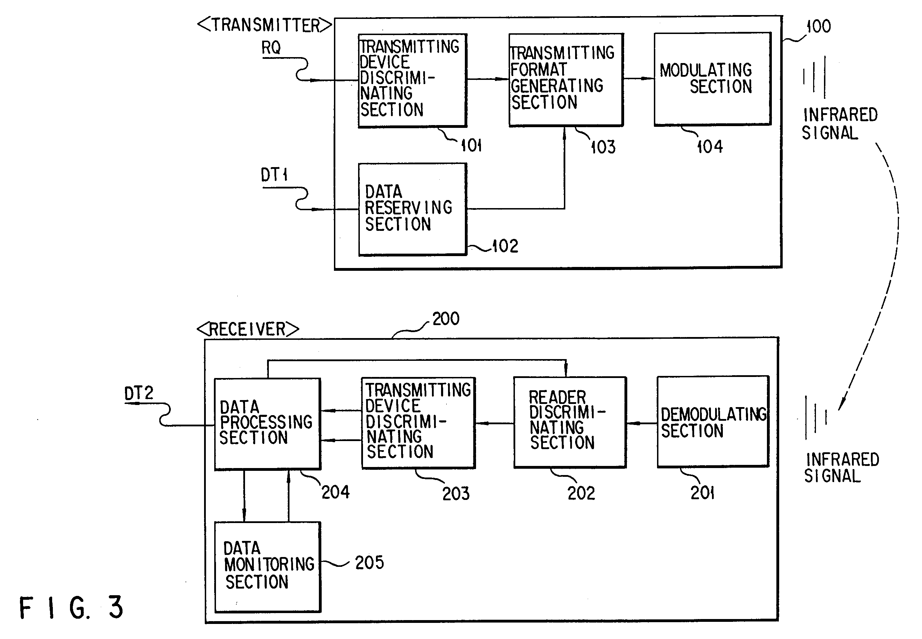

Fig. 3 is a block diagram showing an infrared ray transmitting device, which can freely the above-explained signal format, and the structure of a receiving device receiving the transmission signal and extracting data.

In the normal case, a transmitter 100 fetches a transmission request signal RQ into a transmitting device discriminating section 101 from a data generating device. The transmitter 100 also fetches generation data DT1 into a data reserving section 102 from the data generating device. In this case, the transmission request signal RQ differs depending on the types of the data generating devices, that is, text entry device, relative coordinate device, and absolute coordinate device. The transmission request signal RQ may be input by a user, and the data generating device such as the keyboard, track ball, mouse, touch panel may generate the class and type of the particular device information itself.

The transmitting device discriminating section 101 discriminates what data generating device is from the contents of the transmission request signal RQ, and generates device information corresponding to the data generating device. The generated information is input to a transmitting format generating section 103. As a result, the transmitting format generating section 103 reserves any one of the format areas of Figs. 1A to 1C in a register in accordance with the contents of the device information. In other words, the array areas of the predetermined reader code and custom code are reserved, and the corresponding code is registered therein. Also, the array area of the device information is reserved, and the corresponding information is registered therein. Then, the control data sent from the data reserving section 102 is registered in the array area after information. At this time, a parity bit is added thereto. The above-formed signal is sent to a modulating section 104. The modulating section 104 performs an infrared modulation in accordance with the input signal, and transmits an infrared signal.

When the transmission request signal RQ is input, the transmitting device discriminating section 101 transfers a data invalid code to the transmitting format generating section 103 as device information if data is the content registered in the transmitting device discriminating section 101. As a result, data reserved in the data reserving section 102 is processed as invalid data. At this time, the transmitting device discriminating section 101 may be designed to output an alarm display or an alarm voice.

As long as new device information is not sent from the transmitting device discriminating section 101, the transmitting format generating section 103 waits an input of new data if data sent from the data reserving section 102 is smaller than the maximum number of specified transfer blocks. On the other hand, if data sent from the data reserving section 102 reaches the maximum number of the transfer blocks, the maximum number of blocks is transferred, thereafter data is automatically shifted to a next cycle, and the residual data is transferred.

Reference numeral 200 is a receiver for receiving the infrared signal. The infrared signal is demodulated to an electrical signal by a demodulating section 201. The demodulated signal is input to a reader discriminating section 202. The reader discriminating section 202 detects the reader code of the receiving data and the custom code, and discriminates whether or not the detected code is request for the receiver itself. If the receiver is designated itself, the following data is sent to a transmitting device discriminating section 203. The transmitting device discriminating section 203 discriminates the type of the transmitting device, that is, text entry device, relative coordinate device, absolute coordinate, from the first data (device information), and sends the discrimination result and the following receiving data to a data processing section 204. The data processing section 204 processes receiving data in accordance with the discrimination result (the type of the device), and supplies necessary data DT2 to a non-control section. In this case, an error correction is included in processing the receiving data. The data processing section 204 supplies data start signal/data end signal, which inform that the first and last data blocks have processed, to a data monitoring section 205. The data monitoring section 205 starts monitoring a data space in accordance with the data start signal, and supplies a time out signal to the data processing section 204 in a case where a next data end signal is not supplied from the data processing section 204 until a certain fixed period of time passes.

In a case where the processing of the specified data block is ended or the time out signal is generated, the data processing section 204 sends a receiving process end signal to the reader discriminating section 202. Thereby, the reader discriminating section 202 is set to be in a standby state, and a new data receiving can be performed.

As mentioned above, according to the present invention, the effective data length of the control data to be transmitted can be automatically varied in accordance with the type of the device as a data generating source, and effective data can be processed in one transfer cycle. Therefore, the data processing can be easily performed in the transmitting and receiving sides. Moreover, the plurality of blocks can be continuously transferred, and the overhead, which is generated by the reader code necessary at the time of transmission, can be held to a minimum. Therefore, the technical advantage of the present invention becomes remarkable as the effective data length is longer, and the transmission time can be shortened.

## Claims

1. An infrared ray transmitting apparatus having a reader code informing a start of transmission before the start of transmission of control data in transmitting said control data generated from a data generating device through an infrared ray as a medium, comprising:
code preparing means (101) for discriminating a type and a class of said data generating device, and for preparing a device information code in accordance with said discriminated type and class;
reserving means (102) for reserving said control data generated from said data generating device; and
data transmission format forming means (103) having at least first, second, and third array areas, wherein said first array area is reserved such that said reader code is transferred thereto, said second array area is formed after said first array area and reserved such that said device information code is transferred thereto, said third array area is formed after said second array area and reserved such that said control data is transferred thereto, and a bit length of said third array area is reserved by freely varying its effective data length in accordance with said device information.

2. The infrared ray transmitting apparatus according to claim 1, characterized in that said data generating device includes at least a text entry type device, which can generate key data of a keyboard attached to said device, a relative coordinate type device, which can generate a relative movement data of said device, and an absolute coordinate type device, which can generate absolute coordinate position data designated by an interior of said device.

3. The infrared ray transmitting apparatus according to claim 1, characterized in that said effective data length is reserved such that a coordinate position can be discriminated at one transfer cycle in coordinate data including said relative movement data to be transmitted as said control data and said absolute coordinate position data.

4. An infrared ray receiving apparatus comprising:
demodulating means (201) for receiving a signal transmitted through an infrared ray as a medium, and demodulating said signal, wherein said demodulating means has at least a reader code informing a start of transmission, a device information code in accordance with a type and class of a data generating device, and control data sent output from said data generating device so as to be sequentially arranged, and a data length of said control data is reserved by freely varying its effective data length in accordance with said device information;
a reader code discriminating section (202) for discriminating said reader code from said demodulated signal of said demodulating means;
transmitting device discriminating means (203) for discriminating next incoming device information in response to the discrimination of said reader code by said reader code discriminating section; and
data processing means (204) for processing data by setting an effective data length of next incoming control data in accordance with the content of the discrimination by said transmitting device discriminating means.

5. The infrared ray receiving means according to claim 4, characterized in that said data processing means includes means for processing all pairs of data of a plurality of bytes to be invalid in a case where said control data is formed of a plurality of effective bytes and abnormality occurs in at least data of one byte.

6. The infrared ray receiving means according to claim 4, characterized in that said data processing means includes means for generating a start signal showing a start of data processing and an end signal showing an end of data processing in processing control data corresponding to the effective data length set in accordance with said discrimination content, and monitoring means for monitoring said start signal and end signal, and
said monitoring means sets monitoring time corresponding to said effective data length from said start signal, and forcibly outputs a time out signal after passing set time.

7. An infrared ray transmitting and receiving system comprising:
a code preparing process;
a reserving process;
a data transmission format forming process; and
a modulating process in a transmitting side,
said code preparing process discriminates a type and a class of a data generating device, and prepares a device information code in accordance with said discriminated type and class,
said reserving means reserves control data generated from said data generating device,
said data transmission format forming process has at least first, second, and third array areas, wherein said first array area is reserved such that said reader code is transferred thereto, said second array area is formed after after said first array area and reserved such that said device information code is transferred thereto, said third array area is formed after said second array area and reserved such that said control data is transferred thereto, and a bit length of said third array area is reserved by freely varying its effective data length in accordance with said device information, and
said modulating process modulates a transmission signal of said data transmission format through an infrared ray as a medium and transmits said modulated signal,
a demodulating process;
a reader code discriminating process;
a transmitting device discriminating process; and
a process for processing data in a receiving side,
said demodulating process receives said transmission signal and demodulates said received signal,
said reader code discriminating process discriminates said reader code from said demodulated signal of said demodulating process,
said transmitting device discriminating process discriminates next incoming device information in response to the discrimination of said reader code by said reader code discriminating process, and
said process for processing data by setting an effective data length of next incoming control data in accordance with the content of the discrimination by said transmitting device discriminating process.
